(19) Europäisches Patentamt / European Patent Office / Office européen des brevets

(11) **EP 3 253 157 A1**

(12) **EUROPEAN PATENT APPLICATION**
published in accordance with Art. 153(4) EPC

(43) Date of publication:
**06.12.2017 Bulletin 2017/49**

(51) Int Cl.:
***H04W 72/12*** *(2009.01)*

(21) Application number: **15879727.4**

(22) Date of filing: **09.12.2015**

(86) International application number:
**PCT/CN2015/096870**

(87) International publication number:
**WO 2016/119529 (04.08.2016 Gazette 2016/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.01.2015 CN 201510045145**

(71) Applicant: **ZTE Corporation**
**Shenzhen, Guangdong 518057 (CN)**

(72) Inventors:
• **HUANG, He**
**Shenzhen**
**Guangdong 518057 (CN)**
• **DU, Zhongda**
**Shenzhen**
**Guangdong 518057 (CN)**
• **YU, Yuanfang**
**Shenzhen**
**Guangdong 518057 (CN)**

(74) Representative: **Perronace, Andrea et al**
**Jacobacci & Partners S.p.A.**
**Via Tomacelli, 146**
**00186 Roma (IT)**

(54) **SENDING METHOD AND DEVICE FOR SCHEDULING REQUEST UNDER CARRIER AGGREGATION, TERMINAL, AND STORAGE MEDIUM**

(57) A sending method for a Scheduling Request (SR) under carrier aggregation is provided. A User Equipment (UE) receives, through a Radio Resource Control (RRC) message, and stores Physical Uplink Control Channel (PUCCH) configuration information and SR configuration information of a plurality of serving cells, and, when determining that an SR needs to be sent, the UE selects, according to the SR configuration information, a serving cell from the plurality of serving cells corresponding to the stored PUCCH configuration information to send the SR. A sending device for a scheduling request under carrier aggregation, a terminal and a storage medium are also provided.

Fig. 3

**Description**

**Technical Field**

The disclosure relates to mobile communication technologies, and in particular to a sending method and a sending device for a Scheduling Request (SR) under carrier aggregation, a terminal, and a storage medium

**Background**

With constant development of communication technologies, popularization of smart terminals and emergence of a large number of network applications, mobile wideband communications focused mainly on data services become a tendency of future mobile communication development. In view of the high speed development of future data services, particularly in view of requirements on peak rate and bandwidth, communication systems need to provide larger communication bandwidth. For example, in order to meet the requirement of the Long Term Evolution (LTE) on a downlink peak rate of 1 Gbps and an uplink peak rate of 500Mbps, a maximum transmission bandwidth of 100MHz may need to be provided. However, due to the scarcity of continuous-frequency spectrums of such large bandwidth, 3rd Generation Partnership Project (3GPP) proposes a solution of Carrier Aggregation (CA) in Release 10 (R10), and further enhances the CA in R11 and R12. Since the frequency spectrum of mobile communications is scattered in 800MHz, 900MHz, 1800MHz, 2100MHz, 2400MHz and 2600MHz, these scattered frequency spectrums may be aggregated into a large communication bandwidth through the CA technology, so as to improve flexibility of frequency spectrum applications and improve utilization of frequency spectrums. The CA technology is a core technology for enabling the LTE is to meet the requirements on peak rate and bandwidth.

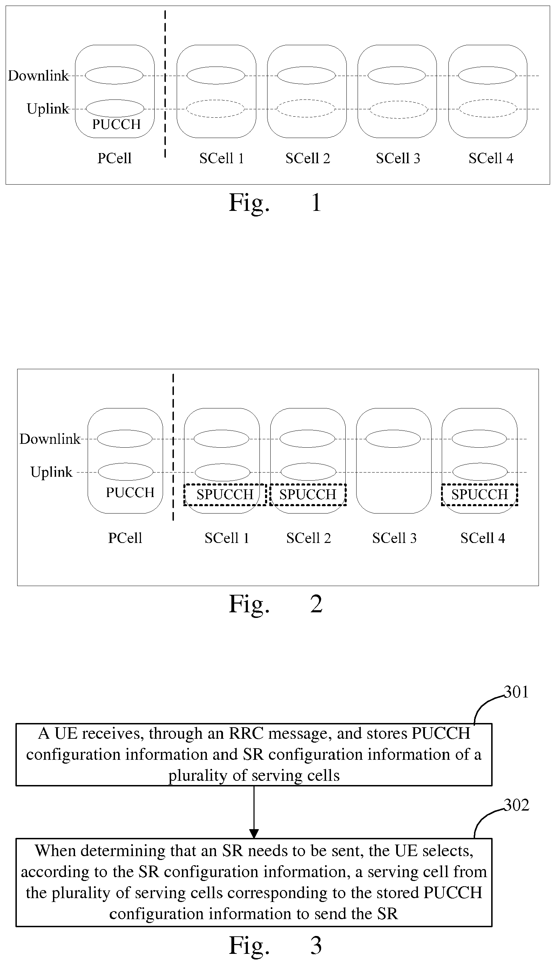

A terminal of 3GPP R8/R9 may receive and transmit on one carrier only, that is to say, each terminal has one serving cell only. A CA terminal of 3GPP R10 may receive and transmit simultaneously on at most five carriers, that is to say, each CA terminal may have at most five serving cells. As shown in FIG. 1, among the five serving cells, one cell is a Primary Cell (PCell), the other four cells are Secondary Cells (SCell). The PCell is a cell initially accessed by a User Equipment (UE) and is responsible for Radio Resource Control (RRC) communication with the UE. The SCell is added during RRC reconfiguration and is configured to provide extra wireless resources. It is regulated in 3GPP R10 that a PCell has uplink and downlink carriers while a SCell has a downlink carrier only but does not have an uplink carrier, and that a Physical Uplink Control Channel (PUCCH) is sent on the PCell only. Control information transmitted in the PUCCH may include, for example, uplink resource scheduling requests, downlink data Acknowledgment/Non-Acknowledgment (ACK/NACK) feedback and channel quality indicator information, etc.

With the increase of the number of UEs having CA capability, the load of PUCCH on the PCell will be significantly increased, which may consequently result in degradation of system performance and reduction of user experience. In 3GPP R13, the LTE system can support a maximum number of aggregated carriers probably up to 32, for example, 1 PCell carrier, 31 SCell carriers. For such large number of carriers, if the control information of all 32 cells can only be transmitted through the PUCCH on the PCell, the PCell will face a huge load, so that the normal work of the PCell may be impacted. Therefore, 3GPP R13 proposes a requirement that the PUCCH also can be transmitted on a SCell. A possible structure meeting such a requirement is as shown in FIG. 2, a PUCCH transmitted on a SCell is SPUCCH, so that the load of the PUCCH on the PCell may be reduced to some extent and the system performance is improved. As shown in FIG. 2, the SCell sending the PUCCH should have an uplink carrier, therefore, all SCells simultaneously having uplink and downlink carriers, for example, SCell 1, SCell 2 and SCell 4, potentially may be configured with PUCCH.

An SR is used to apply for a UL-SCH resource for transmitting new data. When an SR is triggered, if the configured PUCCH is able to be used to transmit the SR information and meanwhile is not conflicted with a measurement gap, the UE may transmit the SR information through the PUCCH. The transmitting opportunity of SR is configured by a high layer, the UE may look up a table to obtain an SR transmitting period $SR_{Periodicity}$ and a subframe offset $N_{OFFSET,SR}$ according to a parameter sr-ConfigIndex $I_{SR}$ configured by network and calculates an uplink subframe position capable of transmitting the SR according to a formula $(10 \times n_f + \lfloor n_s/2 \rfloor - N_{OFFSET,SR}) \bmod SR_{Periodicity} = 0$, where $n_f$ indicates a system frame number and $n_s$ indicates a timeslot number.

Table 1: SR configuration

| SR configuration index $I_{SR}$ | SR transmitting period (ms) $SR_{Periodicity}$ | SR subframe offset $N_{OFFSET,SR}$ |
| --- | --- | --- |
| 0 - 4 | 5 | $I_{SR}$ |
| 5 - 14 | 10 | $I_{SR}$ - 5 |
| 15 - 34 | 20 | $I_{SR}$ - 15 |

(continued)

| SR configuration index $I_{SR}$ | SR transmitting period (ms) $SR_{Periodicity}$ | SR subframe offset $N_{OFFSET,SR}$ |
|---|---|---|
| 35 - 74 | 40 | $I_{SR}$ - 35 |
| 75 - 154 | 80 | $I_{SR}$ - 75 |
| 155 - 156 | 2 | $I_{SR}$ - 155 |
| 157 | 1 | $I_{SR}$ - 157 |

At present, the problem of SR sending of the UE when a plurality of carriers is configured with PUCCH simultaneously in the scenario of carrier aggregation has not been considered.

## Summary

Some embodiments of the disclosure provide a sending method and a sending device for an SR under carrier aggregation, a terminal, and a storage medium, which may solve the above problem in a related technology.

The solution of the disclosure is realized as follows.

An exemplary embodiment of the disclosure provides a sending method for an SR under carrier aggregation, which may include the following acts.

A UE receives, through an RRC message, and stores PUCCH configuration information and SR configuration information of a plurality of serving cells. When determining that an SR needs to be sent, the UE selects, according to the SR configuration information, a serving cell from the plurality of serving cells corresponding to the stored PUCCH configuration information to send the SR.

In the solution, the plurality of serving cells may include a PCell and one or more SCells.

In the solution, the SR configuration information may include a configuration mode and an SR parameter.

In the solution, the configuration mode may include one of the following modes:

A: configuring independently an SR parameter for a serving cell allowed to send the SR;
B: configuring a set of public SR parameters, which takes effect for all serving cells configured with PUCCH and allowed to send the SR through a PUCCH; and
C: configuring part of SR parameters for each serving cell independently, and configuring the other public part of SR parameters for all serving cells, the other part of SR parameters taking effect for all serving cells.

In the solution, the SR parameter may at least include one of the following: SR configuration index sr-ConfigIndex, SR enabling indicator or cell offset.

In the solution, when determining that an SR needs to be sent, selecting, according to the SR configuration information, a serving cell from the plurality of serving cells corresponding to the stored PUCCH configuration information to send the SR may include the following acts. When the UE determines an SR needs to be sent, it is judged, in each Transmission Time Interval (TTI) according to the SR configuration information, whether there are one or more serving cells having a PUCCH possessing an SR sending opportunity among the plurality of serving cells corresponding to the stored PUCCH configuration information. When there are one or more serving cells having a PUCCH possessing the SR sending opportunity, a serving cell is selected from the one or more serving cells having a PUCCH possessing the SR sending opportunity to send the SR.

In the solution, the act that a serving cell is selected from the one or more serving cells having a PUCCH possessing the SR sending opportunity to send the SR may include the following act. A serving cell is selected, according to a selection principle, from the one or more serving cells having a PUCCH possessing the SR sending opportunity to send the SR. The selection principle may include at least one of the following principles:

a: the UE randomly selecting a serving cell to send the SR;
b: the UE selecting a serving cell having a maximum power headroom to send the SR;
c: the UE selecting a serving cell having a minimum transmit power in a current TTI to send the SR;
d: the UE selecting, according to a priority, a serving cell having a highest priority to send the SR;
e: the UE alternately selecting a serving cell to send the SR; and
f: when there is a serving cell adopting a PUCCH of PUCCH format 3 to send ACK/NACK information in a current TTI, preferentially selecting the serving cell to send the SR.

In the solution, when the selection principle includes combination of multiple principles including the principle f, the act of selecting, according to a selection principle, a serving cell from the one or more serving cells having a PUCCH possessing the SR sending opportunity to send the SR may include the following acts. The UE preferentially judges whether in the plurality of serving cells there is a serving cell adopting the PUCCH of PUCCH format 3 to send ACK/NACK information in a current TTI. If there is a serving cell adopting the PUCCH of PUCCH format 3 to send ACK/NACK information in the current TTI, the serving cell is selected to send the SR. If there is no serving cell adopting the PUCCH of PUCCH format 3 to send ACK/NACK information in the current TTI or if there is a plurality of serving cells adopting the PUCCH of PUCCH format 3 to send ACK/NACK information in the current TTI simultaneously, a serving cell is selected to send the SR according to any principle in the multiple principles except the principle f.

In the solution, the act of judging whether there are one or more serving cells having a PUCCH possessing an SR sending opportunity in each TTI according to the SR configuration information may include the following act.

The UE calculates each SR sending opportunity and/or a service cell in which each SR sending opportunity is located using the SR configuration information of a network side.

In the solution, a constraint of calculating each SR sending opportunity may be:

SR sending opportunities of all serving cells are calculated from one same set of SR parameters, and SR sending opportunities of different serving cells are not overlapped.

In the solution, the act of calculating each SR sending opportunity may include the following acts. The UE looks a table to obtain a transmission period $SR_{Periodicity}$ and a subframe offset $N_{OFFSET,SR}$ of the SR on each serving cell according to an sr-ConfigIndex of the SR configuration information, and calculates an uplink subframe position allowed to send the SR on each serving cell respectively according to a formula: $(10 \times n_f + \lfloor n_s/2 \rfloor - N_{OFFSET,SR}) \bmod SR_{Periodicity} = 0$.

In the solution, a formula for calculating a service cell in which each SR sending opportunity is located may be:

$$\left(\left(10 \times n_f + \lfloor n_s / 2 \rfloor - N_{OFFSET,SR}\right) / SR_{Periodicity}\right) \bmod N_{cell} = i$$

where $n_f$ indicates a system frame number, $n_s$ indicates a timeslot number, $SR_{Periodicity}$ indicates an SR transmission period, $N_{OFFSET,SR}$ indicates a subframe offset, $N_{cell}$ indicates the number of serving cells configured with PUCCH and allowed to send SR, and i indicates a sequence number of a serving cell in which the SR sending opportunity is located.

In the solution, a formula for calculating a service cell in which each SR sending opportunity is located may be:

$$\left(\left(\left(10 \times n_f + \lfloor n_s / 2 \rfloor - N_{OFFSET,SR}\right) / SR_{Periodicity}\right) + N_{celloffset}\right) \bmod N_{cell} = i$$

where $n_f$ indicates a system frame number, $n_s$ indicates a timeslot number, $SR_{Periodicity}$ indicates an SR transmission period, $N_{OFFSET,SR}$ indicates a subframe offset, $N_{cell}$ indicates the number of serving cells configured with PUCCH and allowed to send SR, i indicates a sequence number of a serving cell in which the SR sending opportunity is located, and $N_{celloffset}$ indicates an offset of the serving cell.

In the solution, the method may further include the following act. After the UE determines that there are one or more serving cells having a PUCCH possessing an SR sending opportunity, the UE gives up sending the SR in the current TTI according to at least one of the following factors:

(1) currently there is no serving cell having sufficient power to send the SR;
(2) the serving cell possessing the SR sending opportunity currently is conducting a Random Access Channel (RACH) process;
(3) the serving cell possessing the SR sending opportunity currently is in a measurement gap; and
(4) there is a SR sending opportunity having a higher priority after a specified time.

In the solution, situations where there is a SR sending opportunity having a higher priority after the specified time may include at least one of the following:

the SR sending opportunity after the specified time is located in a serving cell having a higher power headroom;
the SR sending opportunity after the specified time is located in a serving cell having a smaller transmit power in relevant TTI;
the SR sending opportunity after the specified time is located in a serving cell having a higher priority; and
after the specified time, there is a serving cell adopting the PUCCH of PUCCH format 3 to send ACK/NACK information.

An exemplary embodiment of the disclosure provides a sending device for an SR under carrier aggregation, including: a receiving and storing module and an SR sending module.

The receiving and storing module is configured to receive, through an RRC message, and store PUCCH configuration information and SR configuration information of a plurality of serving cells.

The SR sending module is configured to: when determining that an SR needs to be sent, select, according to the SR configuration information, a serving cell from the plurality of serving cells corresponding to the stored PUCCH configuration information to send the SR.

In the solution, the plurality of serving cells may include a PCell and one or more SCells.

In the solution, the SR configuration information may include a configuration mode and an SR parameter.

In the solution, the configuration mode may include one of the following modes:

A: configuring independently an SR parameter for a serving cell allowed to send the SR;
B: configuring a set of public SR parameters, which takes effect for all serving cells configured with PUCCH and allowed to send the SR through a PUCCH; and
C: configuring part of SR parameter for each serving cell independently, and configuring the other public part of SR parameters for all serving cells, the other part of SR parameters taking effect for all serving cells.

In the solution, the SR parameter may at least include one of the following: sr-ConfigIndex, SR enabling indicator or cell offset.

In the solution, the SR sending module may include a judgment module and a selection sending module.

The judgment module is configured to: when determining that an SR needs to be sent, judge, in each TTI according to the SR configuration information, whether there are one or more serving cells having a PUCCH possessing an SR sending opportunity among the plurality of serving cells corresponding to the stored PUCCH configuration information; and when there are one or more serving cells having a PUCCH possessing the SR sending opportunity, notify the selection sending module.

The selection sending module is configured to select a serving cell from the one or more serving cells having a PUCCH possessing the SR sending opportunity to send the SR.

In the solution, the selection sending module may be further configured to select, according to a selection principle, a serving cell from the one or more serving cells having a PUCCH possessing the SR sending opportunity to send the SR, the selection principle including at least one of the following principles:

a: randomly selecting a serving cell to send the SR;
b: selecting a serving cell having a maximum power headroom to send the SR;
c: selecting a serving cell having a minimum transmit power in a current TTI to send the SR;
d: selecting, according to a priority, a serving cell having a highest priority to send the SR;
e: alternately selecting a serving cell to send the SR; and
f: when there is a serving cell adopting a PUCCH of PUCCH format 3 to send ACK/NACK information in a current TTI, preferentially selecting the serving cell to send the SR.

In the solution, when the selection principle includes combination of multiple principles including the principle f, the selection sending module may be further configured to: preferentially judge whether in the plurality of serving cells there is a serving cell adopting the PUCCH of PUCCH format 3 to send ACK/NACK information in a current TTI; if there is a serving cell adopting the PUCCH of PUCCH format 3 to send ACK/NACK information in the current TTI, select the serving cell to send the SR; if there is no serving cell adopting the PUCCH of PUCCH format 3 to send ACK/NACK information in the current TTI or if there is a plurality of serving cells adopting the PUCCH of PUCCH format 3 to send ACK/NACK information in the current TTI simultaneously, select a serving cell to send the SR according to any principle in the multiple principles except the principle f.

In the solution, the judgment module may be further configured to calculate each SR sending opportunity and/or a service cell in which each SR sending opportunity is located using the SR configuration information of a network side.

In the solution, a constraint of calculating each SR sending opportunity may be:

SR sending opportunities of all serving cells are calculated from one same set of SR parameters, and SR sending opportunities of different serving cells are not overlapped.

In the solution, the judgment module may be further configured to look up a table to obtain a transmission period $SR_{Periodicity}$ and a subframe offset $N_{OFFSET,SR}$ of the SR on each serving cell according to an sr-ConfigIndex of the SR configuration information, and calculate an uplink subframe position allowed to send the SR on each serving cell respectively according to a formula: $(10 \times n_f + \lfloor n_s/2 \rfloor - N_{OFFSET, SR}) \bmod SR_{Periodicity} = 0$.

In the solution, a formula for calculating a service cell in which each SR sending opportunity is located may be:

$$\left(\left(10 \times n_f + \lfloor n_s / 2 \rfloor - N_{OFFSET,SR}\right) / SR_{Periodicity}\right) \bmod N_{cell} = i$$

where $n_f$ indicates a system frame number, $n_s$ indicates a timeslot number, $SR_{Periodicity}$ indicates an SR transmission period, $N_{OFFSET,SR}$ indicates a subframe offset, $N_{cell}$ indicates the number of serving cells configured with PUCCH and allowed to send SR, and i indicates a sequence number of a serving cell in which the SR sending opportunity is located.

In the solution, a formula for calculating a service cell in which each SR sending opportunity is located may be:

$$\left(\left(\left(10 \times n_f + \lfloor n_s / 2 \rfloor - N_{OFFSET,SR}\right) / SR_{Periodicity}\right) + N_{celloffset}\right) \bmod N_{cell} = i$$

where $n_f$ indicates a system frame number, $n_s$ indicates a timeslot number, $SR_{Periodicity}$ indicates an SR transmission period, $N_{OFFSET,SR}$ indicates a subframe offset, $N_{cell}$ indicates the number of serving cells configured with PUCCH and allowed to send SR, i indicates a sequence number of a serving cell in which the SR sending opportunity is located, and $N_{celloffset}$ indicates an offset of the serving cell.

In the solution, the device may further include a giving up module, which is configured to: after the judgment module determines that there are one or more serving cells having a PUCCH possessing an SR sending opportunity, give up sending the SR in the current TTI according to at least one of the following factors:

(1) currently there is no serving cell having sufficient power to send the SR;
(2) the serving cell possessing the SR sending opportunity currently is conducting a Random Access Channel (RACH) process;
(3) the serving cell possessing the SR sending opportunity currently is in a measurement gap; and
(4) there is a SR sending opportunity having a higher priority after a specified time.

In the solution, situations where there is a SR sending opportunity having a higher priority after the specified time may include at least one of the following:

the SR sending opportunity after the specified time is located in a serving cell having a higher power headroom;
the SR sending opportunity after the specified time is located in a serving cell having a smaller transmit power in relevant TTI;
the SR sending opportunity after the specified time is located in a serving cell having a higher priority; and
after the specified time, there is a serving cell adopting the PUCCH of PUCCH format 3 to send ACK/NACK information.

An exemplary embodiment of the disclosure provides a UE, which may include the sending device for an SR under carrier aggregation described above.

An exemplary embodiment of the disclosure provides a storage medium, which stores a computer program that is configured to execute the sending method for an SR under carrier aggregation described above.

Some exemplary embodiments of the disclosure provide a sending method and a sending device for an SR under carrier aggregation, a terminal, and a storage medium. A UE receives, through an RRC message, and stores PUCCH configuration information and SR configuration information of a plurality of serving cells. When determining that an SR needs to be sent, the UE selects, according to the SR configuration information, a serving cell from the plurality of serving cells corresponding to the stored PUCCH configuration information to send the SR. In this way, the SR sending problem when a plurality of carriers is configured with PUCCH simultaneously in the scenario of carrier aggregation may be solved.

## Brief Description of the Drawings

FIG. 1 is a diagram showing a situation where a carrier aggregation terminal sends PUCCH in a primary cell only.
FIG. 2 is a diagram showing a situation where a carrier aggregation terminal is capable of sending PUCCH in secondary cells.
FIG. 3 is a flowchart of a sending method for an SR under carrier aggregation provided by an embodiment of the disclosure.

FIG. 4 is a structure diagram of a sending device for an SR under carrier aggregation provided by an embodiment of the disclosure.

**Detailed Description of the Embodiments**

In some embodiments of the disclosure, a UE receives, through an RRC message, and stores PUCCH configuration information and SR configuration information of a plurality of serving cells, and, when determining that an SR needs to be sent, the UE selects, according to the SR configuration information, a serving cell from the plurality of serving cells corresponding to the stored PUCCH configuration information to send the SR.

The disclosure is described below in further detail through accompanying drawings and specific embodiments.

An embodiment of the disclosure provides a sending method for an SR under carrier aggregation. As shown in FIG. 3, the method may include the following acts.

At act S301, a UE receives, through an RRC message, and stores PUCCH configuration information and SR configuration information of a plurality of serving cells.

Herein, the plurality of serving cells may include a PCell and one or more SCells; and/or the SR configuration information may include a configuration mode and an SR parameter. The configuration mode may be one of the following modes:

A: configuring independently an SR parameter for a serving cell allowed to send the SR;

B: configuring a set of public SR parameters, which takes effect for all serving cells configured with PUCCH and allowed to send the SR through a PUCCH; and

C: configuring part of SR parameters for each serving cell independently, and configuring the other public part of SR parameters for all serving cells, the other part of SR parameters taking effect for all serving cells, for example, configuring a public SR configuration index (sr-ConfigIndex), then configuring an SR enabling indicator for each serving cell independently, the SR enabling indicator being used to indicate whether a certain serving cell or the PUCCH of a certain serving cell may send the SR. In this mode, the UE may need to combine the two parts of SR parameters to use.

The SR parameter may at least include one of the following: sr-ConfigIndex, SR enabling indicator or cell offset. The SR enabling indicator is used to indicate whether a certain serving cell or the PUCCH of a certain serving cell may send the SR, and the cell offset is used to calculate the cell in which the SR sending opportunity is located.

At act S302, when the UE determines an SR needs to be sent, a serving cell is selected, according to the SR configuration information, from the plurality of serving cells corresponding to the stored PUCCH configuration information to send the SR.

Specifically, when the UE determines that an SR needs to be sent, it is judged, in each TTI according to the SR configuration information, whether there are one or more serving cells having a PUCCH possessing an SR sending opportunity among the plurality of serving cells corresponding to the stored PUCCH configuration information. When there are one or more serving cells having a PUCCH possessing the SR sending opportunity, a serving cell is selected from the one or more serving cells having a PUCCH possessing the SR sending opportunity to send the SR.

Herein, selecting a serving cell from the one or more serving cells having a PUCCH possessing the SR sending opportunity to send the SR may include the following act. A serving cell is selected, according to a preset selection principle, from the one or more serving cells having a PUCCH possessing the SR sending opportunity to send the SR. The selection principle may include at least one of the following principles:

a: the UE randomly selecting a serving cell to send the SR;

b: the UE selecting a serving cell having a maximum power headroom to send the SR;

c: the UE selecting a serving cell having a minimum transmit power in a current TTI to send the SR;

d: the UE selecting, according to a predefined priority, a serving cell having a highest priority to send the SR; the predefined priority may be a priority agreed in a protocol or may be a priority configured by a network side through the RRC message;

e: the UE alternately selecting a serving cell to send the SR; and

f: when there is a serving cell adopting a PUCCH of PUCCH format 3 to send ACK/NACK information in a current TTI, preferentially selecting the serving cell to send the SR.

Herein, when the selection principle includes combination of multiple principles including the principle f, the UE preferentially judges whether in the plurality of serving cells there is a serving cell adopting the PUCCH of PUCCH format 3 to send ACK/NACK information in a current TTI. If there is a serving cell adopting the PUCCH of PUCCH format 3 to send ACK/NACK information in the current TTI, the serving cell is selected to send the SR. If there is no serving cell adopting the PUCCH of PUCCH format 3 to send ACK/NACK information in the current TTI or if there is a plurality of serving cells adopting the PUCCH of PUCCH format 3 to send ACK/NACK information in the current TTI simultaneously, a serving cell is selected to send the SR according to any principle in the multiple principles except the principle f.

In this act, the act of judging whether there are one or more serving cells having a PUCCH possessing an SR sending opportunity in each TTI according to the SR configuration information may include the following act.

The UE calculates each SR sending opportunity and/or a service cell in which each SR sending opportunity is located using the SR configuration information of a network side.

Herein, a constraint of calculating each SR sending opportunity may be:

SR sending opportunities of all serving cells are calculated from one same set of SR parameters, and SR sending opportunities of different serving cells are not overlapped.

In this way, the SR sending opportunities may be evenly distributed on the serving cells configured with PUCCH and allowed to send the SR.

The act of calculating each SR sending opportunity may include the following acts. The UE looks up a table to obtain a transmission period $SR_{Periodicity}$ and a subframe offset $N_{OFFSET,SR}$ of the SR on each serving cell according to an sr-ConfigIndex of the SR configuration information, and calculates an uplink subframe position allowed to send the SR on each serving cell respectively according to a formula: $(10 \times n_f + \lfloor n_s/2 \rfloor - N_{OFFSET, SR}) \bmod SR_{Periodicity} = 0$

Herein, a formula for calculating a service cell in which each SR sending opportunity is located may be:

$$\left(\left(10 \times n_f + \lfloor n_s / 2 \rfloor - N_{OFFSET,SR}\right) / SR_{Periodicity}\right) \bmod N_{cell} = i$$

where $n_f$ indicates a system frame number, $n_s$ indicates a timeslot number, $SR_{Periodicity}$ indicates an SR transmission period, $N_{OFFSET,SR}$ indicates a subframe offset, $N_{cell}$ indicates the number of serving cells configured with PUCCH and allowed to send SR, and i indicates a sequence number of a serving cell in which the SR sending opportunity is located. For example, i=0 indicates PCell, i=1 indicates the first serving cell configured with PUCCH and allowed to send SR that is sorted according to the order from low to high of an SCell index identification (Index ID), i=2 indicates the second one, and so on.

When calculating the serving cell in which the SR opportunity is located, the offset of the serving cell may be added. The offset of the serving cell is configured by the network side, for example, eNB. In such a case, a formula for calculating a service cell in which each SR sending opportunity is located may be:

$$\left(\left(\left(10 \times n_f + \lfloor n_s / 2 \rfloor - N_{OFFSET,SR}\right) / SR_{Periodicity}\right) + N_{celloffset}\right) \bmod N_{cell} = i$$

where $N_{celloffset}$ indicates the offset of the serving cell.

The method may further include the following act. After the UE determines that there are one or more serving cells having a PUCCH possessing an SR sending opportunity, the UE gives up sending the SR in the current TTI according to at least one of the following factors:

(1) currently there is no serving cell having sufficient power to send the SR;
(2) the serving cell possessing the SR sending opportunity currently is conducting an RACH process;
(3) the serving cell possessing the SR sending opportunity currently is in a measurement gap; and
(4) there is a SR sending opportunity having a higher priority after a specified time.

Herein, the specified time may be agreed by a protocol or may be configured by a base station through the RRC message.

Situations where there is a SR sending opportunity having a higher priority after the specified time include at least one of the following:

the SR sending opportunity after the specified time is located in a serving cell having a higher power headroom;
the SR sending opportunity after the specified time is located in a serving cell having a smaller transmit power in relevant TTI;
the SR sending opportunity after the specified time is located in a serving cell having a higher priority; and
after the specified time, there is a serving cell adopting the PUCCH of PUCCH format 3 to send ACK/NACK information.

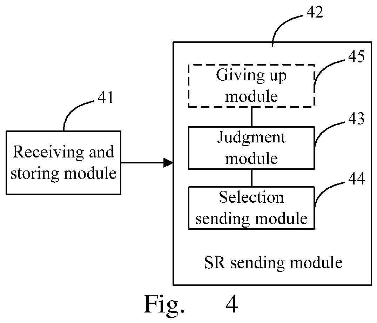

In order to implement the above method, an embodiment of the disclosure provides a sending device for an SR under carrier aggregation. As shown in FIG. 4, the device may include a receiving and storing module 41 and an SR sending module 42.

The receiving and storing module 41 may be realized by a memory of a UE and is configured to receive, through an RRC message, and store PUCCH configuration information and SR configuration information of a plurality of serving cells.

The SR sending module 42 may be realized by a processor of the UE in combination with the memory and is configured to: when determining that an SR needs to be sent, select, according to the SR configuration information, a serving cell from the plurality of serving cells corresponding to the stored PUCCH configuration information to send the SR.

Herein, the plurality of serving cells may include a PCell and one or more SCells; and/or the SR configuration information may include a configuration mode and an SR parameter. The configuration mode may be one of the following modes:

A: configuring independently an SR parameter for a serving cell allowed to send the SR;

B: configuring a set of public SR parameters, which takes effect for all serving cells configured with PUCCH and allowed to send the SR through a PUCCH; and

C: configuring part of SR parameters for each serving cell independently, and configuring the other public part of SR parameters for all serving cells, the other part of SR parameters taking effect for all serving cells, for example, configuring a public SR configuration index (sr-ConfigIndex), then configuring an SR enabling indicator for each serving cell independently, the SR enabling indicator being used to indicate whether a certain serving cell or the PUCCH of a certain serving cell may send the SR. In this mode, the UE may need to combine the two parts of SR parameters to use.

The SR parameter may at least include one of the following: sr-ConfigIndex, SR enabling indicator or cell offset. The SR enabling indicator is used to indicate whether a certain serving cell or the PUCCH of a certain serving cell may send the SR, and the cell offset is used to calculate the cell in which the SR sending opportunity is located.

The SR sending module 42 may include a judgment module 43 and a selection sending module 44.

The judgment module 43 is configured to: when determining that an SR needs to be sent, judge, in each TTI according to the SR configuration information, whether there are one or more serving cells having a PUCCH possessing an SR sending opportunity among the plurality of serving cells corresponding to the stored PUCCH configuration information; and when there are one or more serving cells having a PUCCH possessing the SR sending opportunity, notify the selection sending module 44.

The selection sending module 44 is configured to select a serving cell from the one or more serving cells having a PUCCH possessing the SR sending opportunity to send the SR.

Herein, the selection sending module 44 may be further configured to select, according to a preset selection principle, a serving cell from the one or more serving cells having a PUCCH possessing the SR sending opportunity to send the SR. The selection principle may include at least one of the following principles:

a: randomly selecting a serving cell to send the SR;

b: selecting a serving cell having a maximum power headroom to send the SR;

c: selecting a serving cell having a minimum transmit power in a current TTI to send the SR;

d: selecting, according to a predefined priority, a serving cell having a highest priority to send the SR; the predefined priority may be a priority agreed in a protocol or may be a priority configured by a network side through the RRC message;

e: alternately selecting a serving cell to send the SR; and

f: when there is a serving cell adopting a PUCCH of PUCCH format 3 to send ACK/NACK information in a current TTI, preferentially selecting the serving cell to send the SR.

Herein, when the selection principle includes combination of multiple principles including the principle f, the selection sending module 44 may be further configured to: preferentially judge whether in the plurality of serving cells there is a serving cell adopting the PUCCH of PUCCH format 3 to send ACK/NACK information in a current TTI; if there is a serving cell adopting the PUCCH of PUCCH format 3 to send ACK/NACK information in the current TTI, select the serving cell to send the SR; if there is no serving cell adopting the PUCCH of PUCCH format 3 to send ACK/NACK information in the current TTI or if there is a plurality of serving cells adopting the PUCCH of PUCCH format 3 to send ACK/NACK information in the current TTI simultaneously, select a serving cell to send the SR according to any principle in the multiple principles except the principle f.

The judgment module 43 may be further configured to calculate each SR sending opportunity and/or a service cell in which each SR sending opportunity is located using the SR configuration information of a network side.

Herein, a constraint of calculating each SR sending opportunity may be:

SR sending opportunities of all serving cells are calculated from one same set of SR parameters, and SR sending opportunities of different serving cells are not overlapped.

In this way, the SR sending opportunities may be evenly distributed on the serving cells configured with PUCCH and allowed to send the SR.

The judgment module 43 may be further configured to look up a table to obtain a transmission period $SR_{Periodicity}$ and a subframe offset $N_{OFFSET,SR}$ of the SR on each serving cell according to an sr-ConfigIndex of the SR configuration information, and calculate an uplink subframe position allowed to send the SR on each serving cell respectively according to a formula: $(10 \times n_f + \lfloor n_s/2 \rfloor - N_{OFFSET,SR}) \bmod SR_{Periodicity} = 0$.

Herein, a formula for calculating a service cell in which each SR sending opportunity is located may be:

$$\left(\left(10 \times n_f + \lfloor n_s / 2 \rfloor - N_{OFFSET,SR}\right)/SR_{Periodicity}\right) \bmod N_{cell} = i$$

where $n_f$ indicates a system frame number, $n_s$ indicates a timeslot number, $SR_{Periodicity}$ indicates an SR transmission period, $N_{OFFSET,SR}$ indicates a subframe offset, $N_{cell}$ indicates the number of serving cells configured with PUCCH and allowed to send SR, and i indicates a sequence number of a serving cell in which the SR sending opportunity is located. For example, i=0 indicates PCell, i=1 indicates the first serving cell configured with PUCCH and allowed to send SR that is sorted according to the order from low to high of an SCell index identification (Index ID), i=2 indicates the second one, and so on.

When calculating the serving cell in which the SR opportunity is located, the offset of the serving cell may be added. The offset of the serving cell is configured by the network side, for example, eNB. In such a case, a formula for calculating a service cell in which each SR sending opportunity is located may be:

$$\left(\left(\left(10 \times n_f + \lfloor n_s / 2 \rfloor - N_{OFFSET,SR}\right)/SR_{Periodicity}\right) + N_{celloffset}\right) \bmod N_{cell} = i$$

where $N_{celloffset}$ indicates the offset of the serving cell.

The device may further include a giving up module 45, which is configured to: after the judgment module 43 determines that there are one or more serving cells having a PUCCH possessing an SR sending opportunity, give up sending the SR in the current TTI according to at least one of the following factors:

(1) currently there is no serving cell having sufficient power to send the SR;
(2) the serving cell possessing the SR sending opportunity currently is conducting a RACH process;
(3) the serving cell possessing the SR sending opportunity currently is in a measurement gap; and
(4) there is a SR sending opportunity having a higher priority after a specified time.

Herein, the specified time may be agreed by a protocol or may be configured by a base station through the RRC message.

Situations where there is a SR sending opportunity having a higher priority after the specified time may include at least one of the following:

the SR sending opportunity after the specified time is located in a serving cell having a higher power headroom;
the SR sending opportunity after the specified time is located in a serving cell having a smaller transmit power in relevant TTI;
the SR sending opportunity after the specified time is located in a serving cell having a higher priority; and
after the specified time, there is a serving cell adopting the PUCCH of PUCCH format 3 to send ACK/NACK information.

Based on the above device, an embodiment of the disclosure provides a UE, which may include the above device.

The method of the disclosure is described below in further detail through specific scenarios.

First embodiment

At act 1, a UE receives an RRC reconfiguration message from an eNB. The RRC reconfiguration message configures three serving cells CELL A, CELL B and CELL C for the UE. CELL A is PCell, CELL B/C is SCell, PUCCH is configured in CELL A and CELL B. The RRC reconfiguration message carries SR configuration information which may include SR parameters configured for CELL A and CELL B respectively. The UE stores the received PUCCH configuration information and SR configuration information.

At act 2, when the UE determines that an SR needs to be sent, the UE judges, in each TTI, whether there are one or more serving cells having a PUCCH possessing an SR sending opportunity in the current TTI. The method for calculating each SR sending opportunity is as follows:

the UE looks up a table to obtain transmission periods $SR_{Periodicity}$ and a subframe offset $N_{OFFSET,SR}$ of the SR on each serving cells CELL A and CELL B according to an sr-ConfigIndex respectively configured for CELL A and CELL B by the network, and calculates an uplink subframe position allowed to send the SR on CELL A and CELL B respectively according to a formula: $(10 \times n_f + \lfloor n_s/2 \rfloor - N_{OFFSET,SR}) \bmod SR_{Periodicity} = 0$.

At act 3, when the UE judges that cells CELL A and CELL B have an SR sending opportunity simultaneously in the current TTI, the UE selects one serving cell from CELL A and CELL B to send the SR according to a preset selection principle. Herein, the selection principle may include at least one of the following principles:

a: the UE randomly selecting a serving cell to send the SR;
b: the UE selecting a serving cell having a maximum power headroom to send the SR;
c: the UE selecting a serving cell having a minimum transmit power in a current TTI to send the SR;
d: the UE selecting, according to a priority, a serving cell having a highest priority to send the SR; the predefined priority may be a priority agreed in a protocol or may be a priority configured by a network side through the RRC message;
e: the UE alternately selecting a serving cell to send the SR; and
f: when there is a serving cell adopting a PUCCH of PUCCH format 3 to send ACK/NACK information in a current TTI, preferentially selecting the serving cell to send the SR.

In act 3, when the selection principle includes combination of multiple principles including the principle f, the UE preferentially judges whether in the plurality of serving cells there is a serving cell adopting the PUCCH of PUCCH format 3 to send ACK/NACK information in a current TTI. If there is a serving cell adopting the PUCCH of PUCCH format 3 to send ACK/NACK information in the current TTI, the serving cell is selected to send the SR. If there is no serving cell adopting the PUCCH of PUCCH format 3 to send ACK/NACK information in the current TTI or if there is a plurality of serving cells adopting the PUCCH of PUCCH format 3 to send ACK/NACK information in the current TTI simultaneously, a serving cell is selected to send the SR according to any principle in the multiple principles except the principle f.

Herein, the method may further include the following act. After the UE determines that there are one or more serving cells having a PUCCH possessing an SR sending opportunity, the UE gives up sending the SR in the current TTI according to at least one of the following factors:

(1) currently there is no serving cell having sufficient power to send the SR;
(2) the serving cell possessing the SR sending opportunity currently is conducting an RACH process;
(3) the serving cell possessing the SR sending opportunity currently is in a measurement gap; and
(4) there is a SR sending opportunity having a higher priority after a specified time.

Herein, the specified time may be agreed by a protocol or may be configured by a base station through the RRC message.
Situations where there is a SR sending opportunity having a higher priority after the specified time may include at least one of the following:

the SR sending opportunity after the specified time is located in a serving cell having a higher power headroom;
the SR sending opportunity after the specified time is located in a serving cell having a smaller transmit power in relevant TTI;
the SR sending opportunity after the specified time is located in a serving cell having a higher priority; and
after the specified time, there is a serving cell adopting the PUCCH of PUCCH format 3 to send ACK/NACK information.

Second embodiment

At act 1, a UE receives an RRC reconfiguration message from an eNB. The RRC reconfiguration message configures three serving cells CELL A, CELL B and CELL C for the UE. CELL A is PCell, CELL B/C is SCell, PUCCH is configured in CELL A and CELL B. The RRC reconfiguration message carries SR configuration information which may include a public SR parameter configured for CELL A and CELL B. The UE stores the received PUCCH configuration information and SR configuration information.

At act 2, when the UE determines that an SR needs to be sent, the UE judges, in each TTI, whether there are one or more serving cells having a PUCCH possessing an SR sending opportunity in the current TTI. The method for calculating each SR sending opportunity is as follows:

the UE looks up a table to obtain a transmission period $SR_{Periodicity}$ and a subframe offset $N_{OFFSET,SR}$ of the SR according to the public parameter sr-ConfigIndex SR $I_{SR}$ configured for CELL A and CELL B by the network, and calculates an uplink subframe position allowed to send the SR on CELL A and CELL B respectively according to a formula: $(10 \times n_f + \lfloor n_s/2 \rfloor - N_{OFFSET,SR}) \bmod SR_{Periodicity} = 0$, and meanwhile calculates the serving cell in which the SR sending opportunity is located according to a formula $((10 \times n_f + \lfloor n_s/2 \rfloor - N_{OFFSET,SR})/SR_{Periodicity}) \bmod N_{cell} = i$, where Ncell indicates the number of serving cells configured with PUCCH and allowed to send SR and takes a value of 2 in this embodiment. In this embodiment, when i=0, CELL A is selected to send the SR; when i=1, CELL B is selected to send the SR.

Third embodiment

At act 1, a UE receives an RRC reconfiguration message from an eNB. The RRC reconfiguration message configures three serving cells CELL A, CELL B and CELL C for the UE. CELL A is PCell, CELL B/C is SCell, PUCCH is configured in all CELL A/B/C. The RRC reconfiguration message carries SR configuration information which may include a public SR parameter configured for CELL A/B/C, and an SR enabling indicator configured for PUCCH and/or a serving cell possessing PUCCH and used for indicating whether the PUCCH and/or the serving cell may send the SR. The UE stores the received PUCCH configuration information and SR configuration information. In this embodiment, the eNB indicates in the RRC reconfiguration message that CELL A/B are allowed to send the SR.

At act 2, when the UE determines that an SR needs to be sent, the UE judges, in each TTI, whether there are one or more serving cells having a PUCCH possessing an SR sending opportunity in the current TTI. The method for calculating each SR sending opportunity is as follows:

the UE looks up a table to obtain a transmission period $SR_{Periodicity}$ and a subframe offset $N_{OFFSET,SR}$ of the SR according to the public parameter sr-ConfigIndex SR $I_{SR}$ configured for serving cells CELL A and CELL B by the network, and calculates an uplink subframe position allowed to send the SR respectively according to a formula: $(10 \times n_f + \lfloor n_s/2 \rfloor - N_{OFFSET,SR}) \bmod SR_{Periodicity} = 0$, and meanwhile calculates the serving cell in which the SR sending opportunity is located according to a formula $((10 \times n_f + \lfloor n_s/2 \rfloor - N_{OFFSET,SR})/SR_{Periodicity}) \bmod N_{cell} = i$, where Ncell indicates the number of serving cells configured with PUCCH and allowed to send SR and takes a value of 2 in this embodiment. In this embodiment, when i=0, CELL A is selected to send the SR; when i=1, CELL B is selected to send the SR.

Herein, when calculating the serving cell in which the SR opportunity is located, the offset of the serving cell may be added. The offset of the serving cell is configured by the network side, for example, eNB. In such a case, a formula for calculating a service cell in which each SR sending opportunity is located may be:

$$\left(\left(\left(10 \times n_f + \lfloor n_s/2 \rfloor - N_{OFFSET,SR}\right)/SR_{Periodicity}\right) + N_{celloffset}\right) \bmod N_{cell} = i$$

where $N_{celloffset}$ indicates the offset of the serving cell.

Some embodiments of the disclosure realize the SR sending when a plurality of carriers is configured with PUCCH simultaneously in the scenario of carrier aggregation.

An embodiment of the disclosure also provides a storage medium, which stores a computer program that is configured to execute the sending method for an SR under carrier aggregation described in each of the above embodiments.

The above are exemplary embodiments of the disclosure merely and are not intended to limit the protection scope of the disclosure. Any modifications, equivalent substitutions and improvements made within the principle of the disclosure are intended to be included in the scope of protection defined by the appended claims of the disclosure.

**Industrial Applicability**

In the solution of some embodiments of the disclosure, a UE receives, through an RRC message, and stores PUCCH configuration information and SR configuration information of a plurality of serving cells, and, when determining that an SR needs to be sent, the UE selects, according to the SR configuration information, a serving cell is selected from the plurality of serving cells corresponding to the stored PUCCH configuration information to send the SR. The SR sending problem when a plurality of carriers is configured with PUCCH simultaneously in the scenario of carrier aggregation is solved.

**Claims**

1. A sending method for a Scheduling Request, SR, under carrier aggregation, comprising:

   receiving through a Radio Resource Control, RRC, message and storing, by a User Equipment, UE, Physical Uplink Control Channel, PUCCH, configuration information and SR configuration information of a plurality of serving cells, and, when determining that an SR needs to be sent, selecting, by the UE according to the SR configuration information, a serving cell from the plurality of serving cells corresponding to the stored PUCCH configuration information to send the SR.

2. The sending method as claimed in claim 1, wherein the plurality of serving cells comprises: a primary cell, PCell, and one or more secondary cells, SCells; and/or
   the SR configuration information comprises a configuration mode and an SR parameter.

3. The sending method as claimed in claim 2, wherein the configuration mode comprises one of the following modes:

   A: configuring independently an SR parameter for a serving cell allowed to send the SR;
   B: configuring a set of public SR parameters, which takes effect for all serving cells configured with PUCCH and allowed to send the SR through a PUCCH; and
   C: configuring part of SR parameters for each serving cell independently, and configuring the other public part of SR parameters for all serving cells, wherein the other part of SR parameters takes effect for all serving cells.

4. The sending method as claimed in claim 2, wherein the SR parameter at least comprises one of the following: SR configuration index sr-ConfigIndex, SR enabling indicator or cell offset.

5. The sending method as claimed in claim 1, wherein, when determining that an SR needs to be sent, selecting, according to the SR configuration information, a serving cell from the plurality of serving cells corresponding to the stored PUCCH configuration information to send the SR comprises: when the UE determines that an SR needs to be sent, judging, in each Transmission Time Interval, TTI, according to the SR configuration information, whether there are one or more serving cells having a PUCCH possessing an SR sending opportunity among the plurality of serving cells corresponding to the stored PUCCH configuration information; when there are one or more serving cells having a PUCCH possessing the SR sending opportunity, selecting a serving cell from the one or more serving cells having a PUCCH possessing the SR sending opportunity to send the SR.

6. The sending method as claimed in claim 5, wherein selecting a serving cell from the one or more serving cells having a PUCCH possessing the SR sending opportunity to send the SR comprises: selecting, according to a selection principle, a serving cell from the one or more serving cells having a PUCCH possessing the SR sending opportunity to send the SR, wherein the selection principle comprises at least one of the following principles:

   a: the UE randomly selecting a serving cell to send the SR;
   b: the UE selecting a serving cell having a maximum power headroom to send the SR;
   c: the UE selecting a serving cell having a minimum transmit power in a current TTI to send the SR;
   d: the UE selecting, according to a priority, a serving cell having a highest priority to send the SR;
   e: the UE alternately selecting a serving cell to send the SR; and
   f: when there is a serving cell adopting a PUCCH of PUCCH format 3 to send Acknowledgment/Non-Acknowledgment, ACK/NACK, information in a current TTI, preferentially selecting the serving cell to send the SR.

7. The sending method as claimed in claim 6, wherein when the selection principle comprises combination of multiple principles comprising the principle f, selecting, according to the selection principle, the serving cell from the one or more serving cells having a PUCCH possessing the SR sending opportunity to send the SR comprises: preferentially judging, by the UE, whether in the plurality of serving cells there is a serving cell adopting the PUCCH of PUCCH format 3 to send ACK/NACK information in a current TTI; if there is a serving cell adopting the PUCCH of PUCCH format 3 to send ACK/NACK information in the current TTI, selecting the serving cell to send the SR; if there is no serving cell adopting the PUCCH of PUCCH format 3 to send ACK/NACK information in the current TTI or if there is a plurality of serving cells adopting the PUCCH of PUCCH format 3 to send ACK/NACK information in the current TTI simultaneously, selecting a serving cell to send the SR according to any principle in the multiple principles except the principle f.

8. The sending method as claimed in claim 1, wherein judging whether there are one or more serving cells having a PUCCH possessing an SR sending opportunity in each TTI according to the SR configuration information comprises:

   calculating, by the UE, each SR sending opportunity and/or a service cell in which each SR sending opportunity is located using the SR configuration information of a network side.

9. The sending method as claimed in claim 8, wherein a constraint of calculating each SR sending opportunity is that:

   SR sending opportunities of all serving cells are calculated from one same set of SR parameters, and SR sending opportunities of different serving cells are not overlapped.

10. The sending method as claimed in claim 9, wherein calculating each SR sending opportunity comprises: looking up a table, by the UE, to obtain a transmission period $SR_{Periodicity}$ and a subframe offset $N_{OFFSET,SR}$ of the SR on each serving cell according to an sr-ConfigIndex of the SR configuration information, and calculating, by the UE, an uplink subframe position allowed to send the SR on each serving cell respectively according to a formula: $(10 \times n_f + \lfloor n_s/2 \rfloor - N_{OFFSET, SR}) \bmod SR_{Periodicity} = 0$.

11. The sending method as claimed in any one of claims 8 to 10, wherein a formula for calculating a service cell in which each SR sending opportunity is located is:

$$\left(\left(10 \times n_f + \lfloor n_s / 2 \rfloor - N_{OFFSET,SR}\right) / SR_{Periodicity}\right) \bmod N_{cell} = i$$

where $n_f$ indicates a system frame number, $n_s$ indicates a timeslot number, $SR_{Periodicity}$ indicates an SR transmission period, $N_{OFFSET,SR}$ indicates a subframe offset, $N_{cell}$ indicates the number of serving cells configured with PUCCH and allowed to send SR, and i indicates a sequence number of a serving cell in which the SR sending opportunity is located.

12. The sending method as claimed in any one of claims 8 to 10, wherein a formula for calculating a service cell in which each SR sending opportunity is located is:

$$\left(\left(\left(10 \times n_f + \lfloor n_s / 2 \rfloor - N_{OFFSET,SR}\right) / SR_{Periodicity}\right) + N_{celloffset}\right) \bmod N_{cell} = i$$

where $n_f$ indicates a system frame number, $n_s$ indicates a timeslot number, $SR_{Periodicity}$ indicates an SR transmission period, $N_{OFFSET,SR}$ indicates a subframe offset, $N_{cell}$ indicates the number of serving cells configured with PUCCH and allowed to send SR, i indicates a sequence number of a serving cell in which the SR sending opportunity is located, and $N_{celloffset}$ indicates an offset of the serving cell.

13. The sending method as claimed in claim 1, wherein the method further comprises: after the UE determines that there are one or more serving cells having a PUCCH possessing an SR sending opportunity, giving up sending the SR in the current TTI according to at least one of the following factors:

   (1) currently there is no serving cell having sufficient power to send the SR;
   (2) the serving cell possessing the SR sending opportunity currently is conducting a Random Access Channel, RACH, process;

(3) the serving cell possessing the SR sending opportunity currently is in a measurement gap; and

(4) there is a SR sending opportunity having a higher priority after a specified time.

**14.** The sending method as claimed in claim 13, wherein situations where there is a SR sending opportunity having a higher priority after the specified time comprise at least one of the following:

the SR sending opportunity after the specified time is located in a serving cell having a higher power headroom;

the SR sending opportunity after the specified time is located in a serving cell having a smaller transmit power in relevant TTI;

the SR sending opportunity after the specified time is located in a serving cell having a higher priority; and

after the specified time, there is a serving cell adopting the PUCCH of PUCCH format 3 to send ACK/NACK information.

**15.** A sending device for a Scheduling Request, SR, under carrier aggregation, comprising: a receiving and storing module and an SR sending module, wherein

the receiving and storing module is configured to receive, through a Radio Resource Control, RRC, message, and store Physical Uplink Control Channel, PUCCH, configuration information and SR configuration information of a plurality of serving cells; and

the SR sending module is configured to: when determining that an SR needs to be sent, select, according to the SR configuration information, a serving cell from the plurality of serving cells corresponding to the stored PUCCH configuration information to send the SR.

**16.** The sending device as claimed in claim 15, wherein the plurality of serving cells comprises: a PCell and one or more SCells; and/or

the SR configuration information comprises a configuration mode and an SR parameter.

**17.** The sending device as claimed in claim 16, wherein the configuration mode comprises one of the following modes:

A: configuring independently an SR parameter for a serving cell allowed to send the SR;

B: configuring a set of public SR parameters, which takes effect for all serving cells configured with PUCCH and allowed to send the SR through a PUCCH; and

C: configuring part of SR parameter for each serving cell independently, and configuring the other public part of SR parameters for all serving cells, wherein the other part of SR parameters takes effect for all serving cells.

**18.** The sending device as claimed in claim 16, wherein the SR parameter at least comprises one of the following: sr-ConfigIndex, SR enabling indicator or cell offset.

**19.** The sending device as claimed in claim 15, wherein the SR sending module comprises: a judgment module and a selection sending module, wherein

the judgment module is configured to: when determining that an SR needs to be sent, judge, in each Transmission Time Interval, TTI, according to the SR configuration information, whether there are one or more serving cells having a PUCCH possessing an SR sending opportunity among the plurality of serving cells corresponding to the stored PUCCH configuration information; and when there are one or more serving cells having a PUCCH possessing the SR sending opportunity, notify the selection sending module; and

the selection sending module is configured to select a serving cell from the one or more serving cells having a PUCCH possessing the SR sending opportunity to send the SR.

**20.** The sending device as claimed in claim 19, wherein the selection sending module is further configured to select, according to a selection principle, a serving cell from the one or more serving cells having a PUCCH possessing the SR sending opportunity to send the SR, wherein the selection principle comprises at least one of the following principles:

a: randomly selecting a serving cell to send the SR;

b: selecting a serving cell having a maximum power headroom to send the SR;

c: selecting a serving cell having a minimum transmit power in a current TTI to send the SR;

d: selecting, according to a priority, a serving cell having a highest priority to send the SR;

e: alternately selecting a serving cell to send the SR; and

f: when there is a serving cell adopting a PUCCH of PUCCH format 3 to send Acknowledgment/Non-Acknowledgment, ACK/NACK, information in a current TTI, preferentially selecting the serving cell to send the SR.

21. The sending device as claimed in claim 20, wherein when the selection principle comprises combination of multiple principles comprising the principle f, the selection sending module is further configured to: preferentially judge whether in the plurality of serving cells there is a serving cell adopting the PUCCH of PUCCH format 3 to send ACK/NACK information in a current TTI; if there is a serving cell adopting the PUCCH of PUCCH format 3 to send ACK/NACK information in the current TTI, select the serving cell to send the SR; if there is no serving cell adopting the PUCCH of PUCCH format 3 to send ACK/NACK information in the current TTI or if there is a plurality of serving cells adopting the PUCCH of PUCCH format 3 to send ACK/NACK information in the current TTI simultaneously, select a serving cell to send the SR according to any principle in the multiple principles except the principle f.

22. The sending device as claimed in claim 19, wherein the judgment module is further configured to calculate each SR sending opportunity and/or a service cell in which each SR sending opportunity is located using the SR configuration information of a network side.

23. The sending device as claimed in claim 22, wherein a constraint of calculating each SR sending opportunity is that:

   SR sending opportunities of all serving cells are calculated from one same set of SR parameters, and SR sending opportunities of different serving cells are not overlapped.

24. The sending device as claimed in claim 23, wherein the judgment module is further configured to look up a table to obtain a transmission period $SR_{Periodicity}$ and a subframe offset $N_{OFFSET,SR}$ of the SR on each serving cell according to an sr-ConfigIndex of the SR configuration information, and calculate an uplink subframe position allowed to send the SR on each serving cell respectively according to a formula: $(10 \times n_f + \lfloor n_s/2 \rfloor - N_{OFFSET,SR}) \mathrm{mod} SR_{Periodicity} = 0$.

25. The sending device as claimed in any one of claims 22 to 24, wherein a formula for calculating a service cell in which each SR sending opportunity is located is:

$$\left(\left(10 \times n_f + \left\lfloor n_s / 2 \right\rfloor - N_{OFFSET,SR}\right)/ SR_{Periodicity}\right) \mathrm{mod}\, N_{cell} = i$$

where $n_f$ indicates a system frame number, $n_s$ indicates a timeslot number, $SR_{Periodicity}$ indicates an SR transmission period, $N_{OFFSET,SR}$ indicates a subframe offset, $N_{cell}$ indicates the number of serving cells configured with PUCCH and allowed to send SR, and i indicates a sequence number of a serving cell in which the SR sending opportunity is located.

26. The sending device as claimed in any one of claims 22 to 24, wherein a formula for calculating a service cell in which each SR sending opportunity is located is:

$$\left(\left(\left(10 \times n_f + \left\lfloor n_s / 2 \right\rfloor - N_{OFFSET,SR}\right)/ SR_{Periodicity}\right) + N_{celloffset}\right) \mathrm{mod}\, N_{cell} = i$$

where $n_f$ indicates a system frame number, $n_s$ indicates a timeslot number, $SR_{Periodicity}$ indicates an SR transmission period, $N_{OFFSET,SR}$ indicates a subframe offset, $N_{cell}$ indicates the number of serving cells configured with PUCCH and allowed to send SR, i indicates a sequence number of a serving cell in which the SR sending opportunity is located, and $N_{celloffset}$ indicates an offset of the serving cell.

27. The sending device as claimed in claim 15, further comprising a giving up module, which is configured to: after the judgment module determines that there are one or more serving cells having a PUCCH possessing an SR sending opportunity, give up sending the SR in the current TTI according to at least one of the following factors:

   (1) currently there is no serving cell having sufficient power to send the SR;
   (2) the serving cell possessing the SR sending opportunity currently is conducting a Random Access Channel, RACH, process;
   (3) the serving cell possessing the SR sending opportunity currently is in a measurement gap; and
   (4) there is a SR sending opportunity having a higher priority after a specified time.

**28.** The sending device as claimed in claim 27, wherein situations where there is a SR sending opportunity having a higher priority after the specified time comprise at least one of the following:

the SR sending opportunity after the specified time is located in a serving cell having a higher power headroom;
the SR sending opportunity after the specified time is located in a serving cell having a smaller transmit power in relevant TTI;
the SR sending opportunity after the specified time is located in a serving cell having a higher priority; and
after the specified time, there is a serving cell adopting the PUCCH of PUCCH format 3 to send ACK/NACK information.

**29.** A User Equipment, UE, comprising the sending device for a Scheduling Request, SR, under carrier aggregation as claimed in any one of claims 15 to 28.

**30.** A storage medium, which stores a computer program that is configured to execute the sending method for a Scheduling Request, SR, under carrier aggregation as claimed in any one of claims 1 to 14.

Fig.   1

Fig.   2

301

A UE receives, through an RRC message, and stores PUCCH configuration information and SR configuration information of a plurality of serving cells

302

When determining that an SR needs to be sent, the UE selects, according to the SR configuration information, a serving cell from the plurality of serving cells corresponding to the stored PUCCH configuration information to send the SR

Fig.   3

Fig. 4

# INTERNATIONAL SEARCH REPORT

| International application No. |
|---|
| **PCT/CN2015/096870** |

**A. CLASSIFICATION OF SUBJECT MATTER**

H04W 72/12 (2009.01) i

According to International Patent Classification (IPC) or to both national classification and IPC

**B. FIELDS SEARCHED**

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNPAT, CNKI, WPI, EPODOC, IEEE, 3GPP: radio resource control, physical uplink control channel, determine, carrier?, aggregation, schedul+ request, RRC, cell?, pucch, configuration, obtain+, select+, correspond+

**C. DOCUMENTS CONSIDERED TO BE RELEVANT**

| Category* | Citation of document, with indication, where appropriate, of the relevant passages | Relevant to claim No. |
|---|---|---|
| PX | CN 104661316 A (ZTE CORP.), 27 May 2015 (27.05.2015), claims 1-29 | 1-30 |
| A | CN 101877911 A (DATANG MOBILE COMMUNICATIONS EQUIPMENT CO., LTD.), 03 November 2010 (03.11.2010), claim 18, description, paragraphs [0107]-[0110], and figure 9 | 1-30 |
| A | CN 102123399 A (HUAWEI TECHNOLOGIES CO., LTD.), 13 July 2011 (13.07.2011), the whole document | 1-30 |
| A | EP 2785102 A1 (SHARP KABUSHIKI KAISHA), 01 October 2014 (01.10.2014), the whole document | 1-30 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 17 February 2016 (17.02.2016) | **01 March 2016 (01.03.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **ZHANG, Qian** Telephone No.: (86-10) **82245296** |

Form PCT/ISA/210 (second sheet) (July 2009)

## INTERNATIONAL SEARCH REPORT
### Information on patent family members

| International application No. |
| --- |
| **PCT/CN2015/096870** |

| Patent Documents referred in the Report | Publication Date | Patent Family | Publication Date |
| --- | --- | --- | --- |
| CN 104661316 A | 27 May 2015 | None | |
| CN 101877911 A | 03 November 2010 | US 2012113914 A1 | 10 May 2012 |
| | | WO 2010124645 A1 | 04 November 2010 |
| | | EP 2426860 A1 | 07 March 2012 |
| | | IN MUMNP201102291 E | 30 March 2012 |
| CN 102123399 A | 13 July 2011 | WO 2011082675 A1 | 14 July 2011 |
| | | US 2013003678 A1 | 03 January 2013 |
| | | EP 2523520 A1 | 14 November 2012 |
| | | IN 1760KOLNP2012 A | 01 March 2013 |
| EP 2785102 A1 | 01 October 2014 | WO 2013077339 A1 | 30 May 2013 |
| | | US 2014328304 A1 | 06 November 2014 |
| | | CN 103947246 A | 23 July 2014 |
| | | JP 2013110657 A | 06 June 2013 |
| | | JP 2015222993 A | 10 December 2015 |

Form PCT/ISA/210 (patent family annex) (July 2009)